# FASCICULE DE BREVET EUROPEEN

(11) **EP 1 946 206 B1**
(45) Date de publication et mention de la délivrance du brevet: **25.12.2013**
(21) Numéro de dépôt: 06820297.7
(22) Date de dépôt: 16.10.2006
(51) Int. Cl.: H04M 1/725, H04W 88/02, G06F 9/44

(54) **PROCEDE ET SYSTEME DE GESTION DES APPLICATIONS D'UN TERMINAL MOBILE**
VERFAHREN UND EINRICHTUNG ZUR VERWALTUNG VON ANWENDUNGEN EINES MOBILEN ENDGERÄTS
METHOD AND DEVICE FOR MANAGING APPLICATIONS OF A MOBILE TERMINAL

(30) Priorité: 17.10.2005 FR 0510575
(43) Date de publication de la demande: 23.07.2008
(73) Titulaire: Orange, 75015 Paris (FR); NXP B.V., 5656 AG Eindhoven (NL)
(72) Inventeur: KERDRAON, Alan, F-14000 Caen (FR); MOREL, Thierry, F-14930 Eterville (FR); BRIOT, Olivier, F-35350 Saint Meloir des Ondes (FR); LEGROS, Jérôme, F-14000 Caen (FR); MEYN, Hauke, 25569 Krempermoor (DE)
(74) Mandataire: Thévenet, Jean-Bruno
(86) Numéro de dépôt international: PCT/FR2006/051036
(87) Numéro de publication internationale: WO 2007/045790

(56) Documents cités:
- WO-A1-2005/020604
- WO-A2-98/32089
- FR-A1- 2 857 193
- US-A1- 2004 186 918
- US-A1- 2005 006 461
- US-B1- 6 430 599
- MECKLER A: "JAVA AND INTER-APPLET COMMUNICATION A COMMUNICATION MECHANISM USING THE JAVA HASH TABLE" DR. DOBB'S JOURNAL, M&T PUBL., REDWOOD CITY, CA,, US, vol. 22, no. 10, octobre 1997 (1997-10), pages 46,48,50-53,103, XP008000277 ISSN: 1044-789X

## Description

### Domaine technique de l'invention

L'invention se rapporte au domaine des télécommunications mobiles, et plus particulièrement à celui de la gestion des applications d'un terminal mobile.

### Arrière-plan de l'invention

Actuellement, un utilisateur d'un terminal mobile du type téléphone mobile ou téléphone intelligent « smart phone » est confronté à une offre de services de plus en plus riche. Au delà des services classiques de téléphonie on propose à l'utilisateur un ensemble de services divers et variés comme des services de messageries, de lecture en transit « streaming » audio et vidéo, de jeux, de téléchargement de contenu, d'agenda, etc. Ces services sont accessibles soit de manière locale sur le terminal mobile, soit via un réseau mobile (GSM, GPRS, UMTS, etc.), soit encore en situation de proximité, par exemple via des protocoles d'échanges tels que l'IrDA, Bluetooth ou le RFID.

Ces services s'appuient sur des applications qui sont stockées soit directement dans le terminal mobile soit dans des cartes à puces ou cartes intelligentes "SmartCard". On notera qu'un service peut faire appel à une ou plusieurs applications.

Par exemple, dans le système Java, lorsqu'une application est sur le terminal mobile, elle correspond à une applet nommée MIDIet (Mobile Information Device Profile Applet), c'est-à-dire une application Java exécutable sur un mobile Java. Ainsi, la partie présentation (e.g. MIDIet Java) qui gère l'interface homme machine (IHM) de l'application est propre au terminal mobile sur lequel elle s'exécute. Elle prend en charge l'interface graphique de l'application ainsi que la gestion de l'accès à certaines ressources du terminal mobile ou du réseau (par exemple établissement d'une communication GSM, connexion à un serveur WAP, envoi d'un SMS, etc.). On notera qu'une MIDlet est en général une applet spécifique qui ne facilite pas l'intégration d'une nouvelle application sur le terminal mobile.

Par ailleurs, lorsqu'une application est sur une carte intelligente (SmartCard) de type carte à puce elle correspond à un Cardlet (JavaCard Applet). Dans ce cas, la partie métier (e.g. Cardlet Java) qui gère les données de l'application peut être stockée soit dans une carte SIM du terminal mobile soit dans un composant spécifique comme par exemple un SMART MX.

Il est important de noter que le déploiement et la gestion de ces applications aussi appelées "cartes" ne sont pas normalisés si bien que chaque fournisseur de carte propose sa propre solution en terme notamment de gestion. Ainsi, la multiplication des cartes ou applications augmente la complexité de gestion de ces applications du côté de l'utilisateur.

Le document US 2005/0006461 décrit un terminal mobile qui mémorise les transactions d'une application. Les documents FR 2 857 193, WO 98/32089 et WO 2005/020604 décrivent des communications entre une carte mémorisant une application et un terminal.

### Objet et résumé de l'invention

L'invention vise un système de gestion selon la revendication 1.

L'invention vise aussi une carte selon la revendication 3.

### Brève description des dessins

D'autres particularités et avantages de l'invention ressortiront à la lecture de la description faite, ci-après, à titre indicatif mais non limitatif, en référence aux dessins annexés, sur lesquels :
- la figure 1 est une vue schématique d'un système de gestion d'un terminal mobile comprenant une pluralité d'applications selon l'invention ;
- les figures 2 et 3 sont des exemples schématiques illustrant des vues détaillées de la figure 1 ;
- la figure 4 est une vue schématique d'un mode de réalisation particulier du système de gestion de la figure 3 ; et
- les figures 5 à 13 sont des schémas dynamiques décrivant le fonctionnement entre les différents éléments du système de gestion du terminal mobile selon l'invention.

### Description détaillée de modes de réalisation

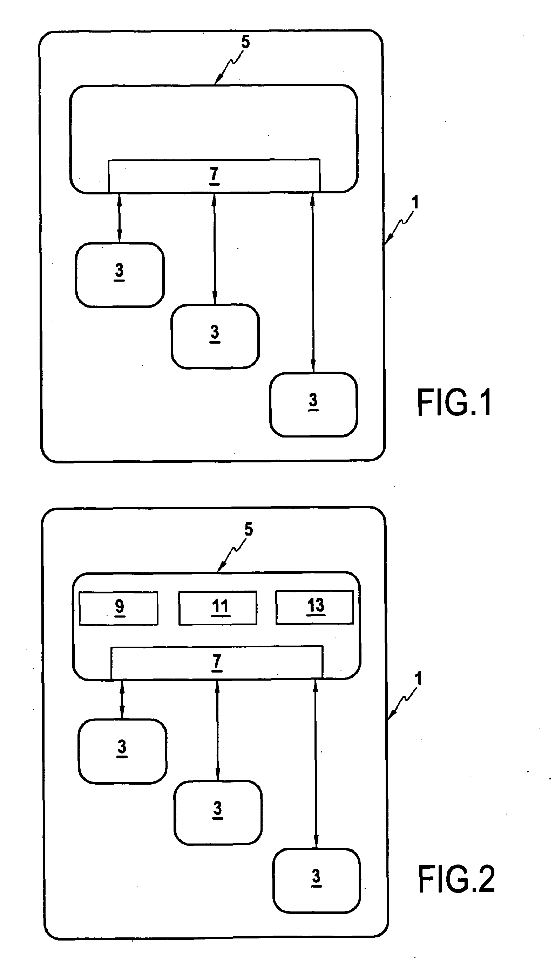

La figure 1 illustre un exemple d'un système de gestion 1 d'un ensemble d'applications 3 stocké sur un terminal mobile selon l'invention. Par ensemble d'applications, on entend une ou plusieurs applications. Ce système comporte un gestionnaire d'applications 5 (*Applications Handler*) destiné à gérer au moins une application 3. Le gestionnaire d'applications 5 comprend un moyen d'accès 7 à l'ensemble d'applications 3 permettant à ladite au moins une application 3 d'accéder à au moins une fonction déterminée. Ainsi, ce moyen d'accès 7 est un accès commun à un ensemble d'applications 3 installées sur le terminal mobile permettant de normaliser la gestion de ces applications 3 et de faciliter l'intégration de toute nouvelle application. A titre d'exemple, le moyen d'accès 7 peut correspondre à des applications « JAVA » de type « javacard ».

En outre, la figure 2 montre que le gestionnaire d'applications 5 comporte un moyen de stockage 9 qui peut être appelé annuaire des applications (*Repository*) ainsi qu'éventuellement un journal des transactions 11 / (*Transaction Log*) et un module de sécurité 13.

Ainsi, le moyen de stockage 9 permet l'enregistrement des informations relatives à toute application 3 déjà installée sur le terminal mobile ou à toute nouvelle application à intégrer sur le terminal mobile. Le moyen de stockage 9 peut par exemple comporter une liste des applications 3 installées sur le terminal mobile ainsi que des paramètres associées à chacune de ces applications 3. On notera qu'une application peut être gérée par le gestionnaire d'applications 5 lorsqu'elle est enregistrée dans le moyen de stockage 9.

Le journal des transactions 11 permet l'enregistrement des informations relatives aux transactions réalisées par l'utilisateur à partir du terminal mobile. Ces informations peuvent comporter les dates de début et fin de la transaction ainsi que le résultat de la transaction.

De même, le module de sécurité 13 permet l'administration de données de sécurité comprenant par exemple des codes et des clés de sécurité relatives à toute application 3.

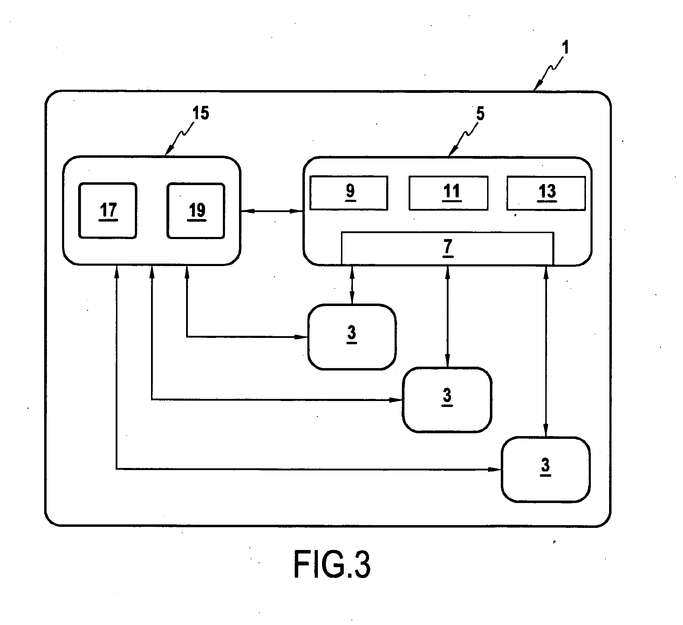

La figure 3 illustre un exemple plus détaillé de la figure 1 montrant que le système de gestion 1 comporte un moyen de gestion centralisée 15 (*Applications Manager*) relié au gestionnaire d'applications 5. Ce moyen de gestion centralisée 15 permet la génération d'une vue unifiée de ladite au moins une application 3 gérée par le gestionnaire d'applications 5.

Plus particulièrement, le moyen de gestion centralisée 15 comporte une interface utilisateur graphique 17 (GUI *Graphique User Interface*) et un connecteur 19. Ce dernier qui peut prendre la forme d'une Midlet Java permet l'échange des informations relatives à ladite au moins une application 3 entre l'interface utilisateur graphique 17 et le gestionnaire d'applications 5. Il récupère et met à jour les informations relatives aux applications 3. Ainsi, ce connecteur 19 réalise l'adaptation protocolaire en s'appuyant sur des protocoles par exemple basés sur la JSR 177 (*Java Specification Request - Security and Trust Services API for J2ME*) pour un dialogue avec une carte SIM ou basé sur la JSR 257 (*Java Specification Request - Contactless Communication API*) pour une gestion de communication sans contact.

Ainsi, le moyen de gestion centralisée 15 offre à l'utilisateur via l'interface utilisateur graphique 17, les interfaces graphiques nécessaires à la gestion des applications 3 et à la construction d'une vue unifiée de ces applications 3. La construction de cette vue se fait en s'appuyant sur l'élément connecteur 19 en liaison avec le gestionnaire d'applications 5 qui offre tout un ensemble de fonctions déterminées.

En effet, selon cet exemple, le moyen d'accès 7 du gestionnaire d'applications 5 offre à ladite au moins une application 3 ou au moyen de gestion centralisée 15 au moins une fonction parmi un ensemble de fonctions déterminées comportant les fonctions suivantes :
- la sélection d'une application 3 à partir de son identifiant ou de son index,
- l'enregistrement d'une application 3 et l'enregistrement de l'identifiant de cette application dans le moyen de stockage 9,
- l'obtention de l'identifiant d'une application 3 à partir de son index,
- la mise à jour de certains paramètres d'une application 3 concernant par exemple le nom de l'application 3, le drapeau (*flag*) d'activation d'un code de sécurité (code PIN) de l'application 3 ou le drapeau d'activation de l'application 3 elle-même,
- la récupération de ces paramètres concernant le nom de l'application 3, le drapeau (*flag*) d'activation du code de sécurité (code PIN) de l'application 3 ou le drapeau d'activation de l'application 3,
- la récupération des données métiers d'une application 3 comme par exemple un identifiant client, la date de validité de l'application 3, le crédit disponible,
- la récupération des transactions relatives à une application en s'appuyant sur le journal des transactions,
- la vérification d'un code de sécurité, par exemple le code PIN ou une clé d'authentification en s'appuyant sur le module de sécurité,
- la modification d'un paramètre de sécurité comme le code PIN,
- le déverrouillage d'un code de sécurité comme le code PIN,
- l'authentification d'un dispositif externe, par exemple lors de la mise en place d'un canal sécurisé,
- l'enregistrement d'une transaction,
- la récupération d'un code de sécurité, par exemple le code PIN.

Par ailleurs, le moyen de stockage 9 peut comporter pour une application donnée, l'index de l'application 3, l'identifiant de l'application 3, le nom de l'application 3, l'état de la protection de l'application 3 par le code PIN (par exemple l'état « vrai » signifie une vérification obligatoire du code PIN et un état « faux » signifie pas de vérification du code PIN), et l'état d'activation de l'application 3 (par exemple l'état « vrai » signifie une application activée donc utilisable et un état « faux » signifie une application désactivée donc non utilisable).

En outre, le journal des transactions 11 peut comporter des informations sur toutes les transactions effectuées par l'utilisateur à partir de son terminal mobile. Un enregistrement d'une transaction peut être défini par l'identifiant de l'application et des données significatives de la transaction (par exemple, la date de début de la transaction, la date de la fin de la transaction, le montant consommé, le montant restant, le résultat de la transaction, etc.).

Par ailleurs, le module de sécurité 13 contient et administre le ou les code(s) de sécurité des applications (par exemple code PIN), le nombre maximum d'essais autorisé avant blocage, le nombre d'essais ratés successivement ainsi que la clé de déblocage PUK (*Pin Unblock Key*) du code PIN.

Ainsi, le gestionnaire d'applications 5 peut gérer les paramètres des applications 3 (nom, drapeau d'activation, etc.), l'enregistrement des applications 3 et la trace des transactions relatives à l'utilisation des applications 3. Il offre également des fonctions de consultation des données métier propre à chaque application, de gestion des paramètres de sécurité (code PIN, vérification de code de sécurité, déblocage de code PIN), de lecture des drapeaux d'activation ou encore d'enregistrement d'une transaction. Autrement dit, le gestionnaire d'applications 5 possède une connaissance des applications 3 installées sur le terminal mobile ainsi que de leur paramétrage.

Dès lors, le moyen de gestion centralisée 15 en relation avec le gestionnaire d'applications 5 permet à l'utilisateur de lister toutes les applications 3 à sa disposition, de lister les informations (au sens de données métier) relatives à une application 3 déterminée, de sélectionner une application 3 particulière et consulter son paramétrage (saisie du code obligatoire ou non, application activée, etc.), de consulter la liste des dernières transactions effectuées avec une application 3, et de paramétrer les applications (modification du code PIN, activation d'une application, désactivation d'une application, activation de la protection par un code PIN, etc.). Autrement dit, le moyen de gestion centralisée 15 peut gérer, construire et afficher la vue unifiée des applications 3 disponibles sur le terminal mobile de l'utilisateur.

Par ailleurs, on notera que lorsque les applications 3 sont exécutées sur le terminal mobile, elles permettent de rendre un ensemble de services à l'utilisateur. L'exécution d'une application 3 peut être liée à une autre application ou encore à un système externe au terminal (par exemple activation d'une Cardlet par un lecteur local externe pour un service de paiement d'une prestation). On notera que toute application 3 installée et opérationnelle sur le terminal mobile est obligatoirement connue et enregistrée auprès du gestionnaire d'applications 5. Ainsi, toute nouvelle application est enregistrée par le gestionnaire d'applications 5 dans le moyen de stockage 9 du système de gestion 1 des applications du terminal mobile.

Par ailleurs, pour réaliser un service déterminé, l'application 3 correspondante récupère depuis le gestionnaire d'applications 5 des paramètres relatifs à cette application 3 afin de rendre une prestation à l'utilisateur.

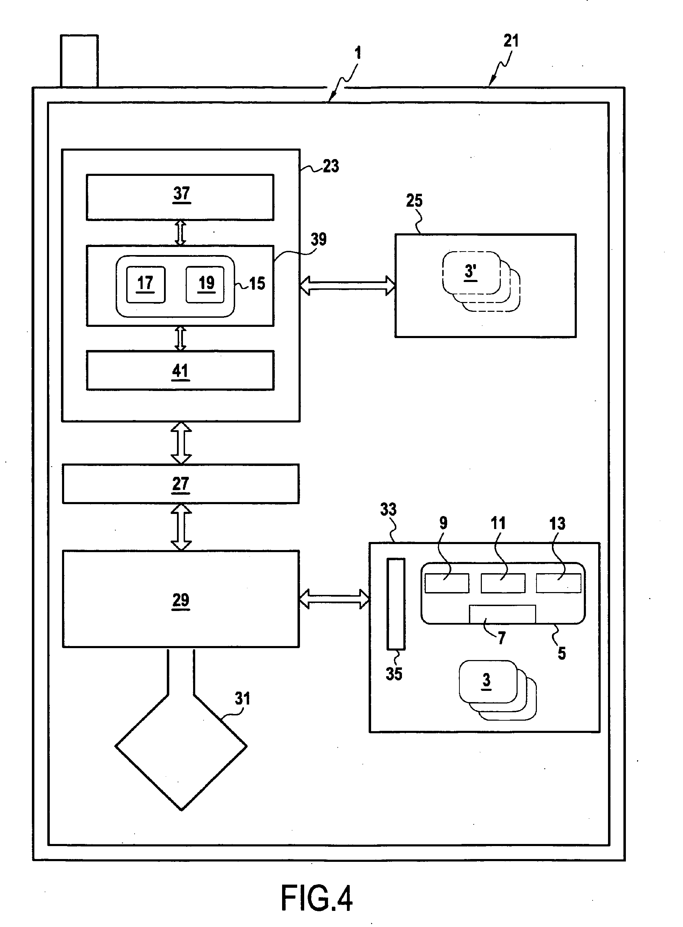

La figure 4 illustre un mode de réalisation particulier du système de gestion 1 des applications d'un terminal mobile selon la figure 3.

Ce schéma illustre un terminal mobile 21 de type JAVA comportant un module de communication 23 (*Baseband*) réalisant les fonctions de base du terminal mobile 21, un module d'identification de l'abonné 25 (carte SIM), un module d'adaptation AML (*Adaptation and Mapping Layers*) 27, un module de communication locale 29 (puce NFC), une antenne 31, et un composant 33 correspondant à une carte SmartMX.

La carte SmartMX est un composant 33 de type contrôleur de carte à puce (*smart card*) combinant des coprocesseurs de type DES (*Data Encryption Standard*) ou RSA (Rivest Shamir Adleman) et autorisant l'implémentation de systèmes d'exploitation (OS) comme le « Java Open Platform ». Il dispose également d'interfaces ISO 14443 ou ISO 7816 et stocke des applications javacard (l'application "Cardlet Assistant") ainsi que des applications partenaire ("Cardlets Partner") ainsi que leurs données afférentes. Par ailleurs, le composant 33 (SmartMX) comporte un système d'exploitation ouvert 35 basé sur le standard JCOP (*JavaCard OpenPlatform*)*.*

Ainsi, le gestionnaire d'application 5 correspond au "Cardlet Assistant" et prend la forme d'une application javacard aussi appelée CARDlet. Cette CARDiet 5 comprend quatre sous éléments correspondant au moyen d'accès 7, au moyen de stockage 9, au journal des transactions 11 et au module de sécurité 13. Ce gestionnaire d'applications 5 réside alors sur le composant 33 (carte SmartMX).

Par ailleurs les applications 3 correspondent à des applications JAVA de type javacard appelées CARDlets (Cardlets partner) stockées dans le composant 33 (carte SmartMX).

Le module de communication 23 (*Baseband*) comporte une interface homme machine 37 MMI (*Man Machine Interface*) native du terminal mobile 21, un module 39 d'applications JAVA et un composant 41 correspondant à un Java 2 Micro Edition.

Le module 39 d'applications JAVA comporte une Midlet JAVA appelée "Card Summary" et qui correspond au moyen de gestion centralisée 15. Ainsi, cette Midlet JAVA comportant l'interface utilisateur graphique 17 et le connecteur 19, offre à l'utilisateur une vue unifiée des applications 3 (Cardlets).

Le composant 41 (Java 2 Micro Edition) comprend tous les éléments nécessaires à l'exécution de Mildets Java sur le terminal mobile 21. Ainsi, il comprend une machine virtuelle et les interfaces de programmation d'applications API (*Application Programming Interface*) nécessaires à l'exécution des MIDlets mais également les API permettant de dialoguer avec le module d'identification de l'abonné 25 (carte SIM), avec les applications 3 Java disponibles sur le composant 33 (carte SmartMX) ou encore avec le module de communication locale 29 (puce NFC) du terminal mobile 21.

Le module d'adaptation 27 (AML) comprend différentes couches d'abstraction, d'adaptation et de correspondance (*mapping*) permettant une communication entre le module de communication 23 (*Baseband*) et notamment les Midlets, le composant 33 (carte SmartMX) et le module de communication locale 29 (puce NFC) du terminal mobile 21.

En effet, le module de communication locale 29 permet une communication locale via l'antenne 31 entre le terminal mobile 21 et un lecteur externe ou entre le terminal mobile 21 et un tag RFID (*Radio Frequency IDentification*)*.* Le module de communication locale 29 permet aussi la communication entre le moyen de gestion centralisée 15 (Card Summary) et le gestionnaire d'application 5 (Cardlet assistants) et les applications 3 (Cardlets partenaires).

Éventuellement, le module d'identification de l'abonné 25 (carte SIM) peut comporter des applications 3' (représentées en pointillée) de type CARDlets.

On notera que le système de gestion 1 comporte un ou plusieurs programmes d'ordinateur comportant des instructions de code pour la mise en oeuvre du procédé de gestion selon l'invention lorsque le ou les programmes d'ordinateur sont exécutés par les différents éléments du système de gestion 1 des applications d'un terminal mobile.

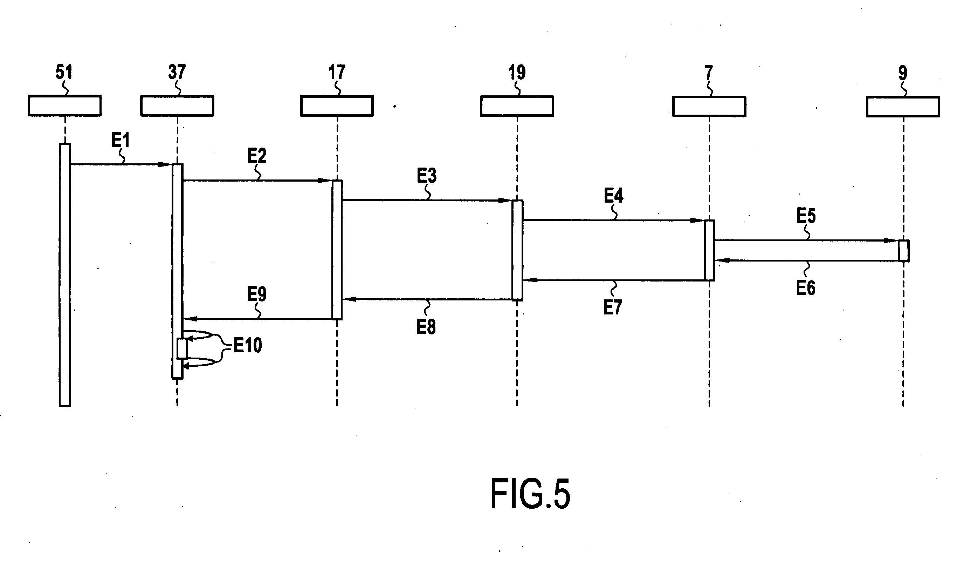

Les figures 5 à 13 correspondent à des schémas dynamiques décrivant le fonctionnement entre les différents éléments du système de gestion 1 des applications d'un terminal mobile selon l'invention.

La figure 5 correspond au lancement ou à l'activation par l'utilisateur 51 du moyen de gestion centralisé 15. Celle-ci se fait à partir de l'interface homme machine 37 (IHM) du terminal mobile 21 (étapes E1, E2). L'application de gestion est alors lancée par l'interface utilisateur graphique 17 qui sollicite la liste des applications 3 disponibles ou installées sur le terminal mobile 21 auprès du moyen d'accès 7 du gestionnaire d'applications 5 via le connecteur 19 (étapes E3, E4). Pour cela le moyen d'accès 7 du gestionnaire d'applications 5 s'adresse au moyen de stockage 9 (étape E5). En retour, l'interface homme machine 37 récupère la liste des applications disponibles sous la forme d'une liste contenant au moins les noms et index des applications (étapes E6 à E9). Cette liste est alors disponible sur l'interface homme machine (étape E10).

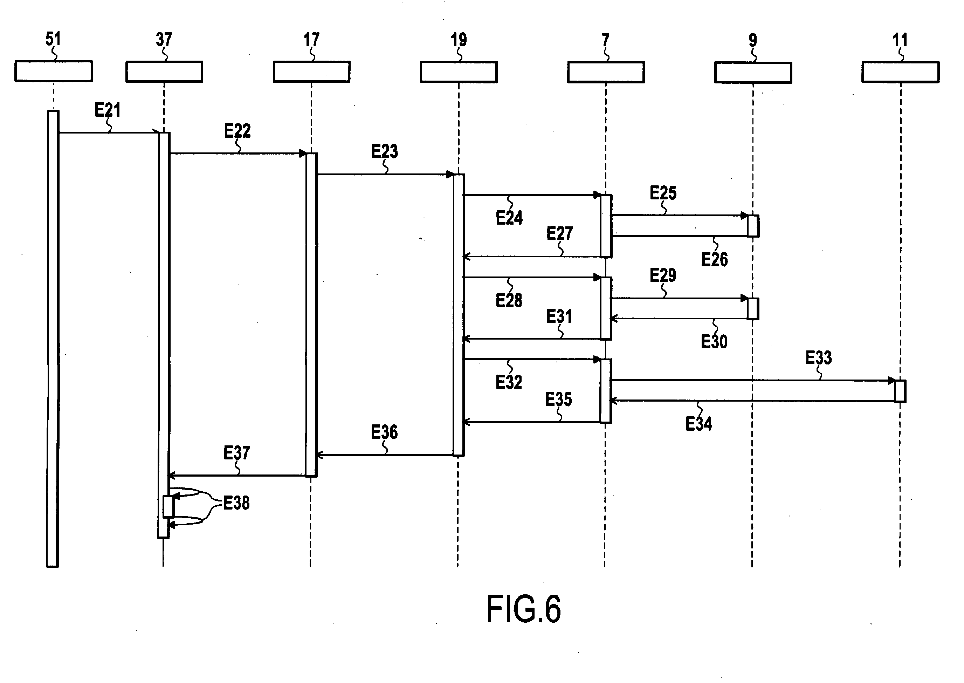

La figure 6 correspond à la sélection d'une application particulière par l'utilisateur 51.

En effet, suite à la demande de sélection d'une application particulière par l'utilisateur 51 via l'interface homme machine 37 (étapes E21, E22), l'interface utilisateur graphique 17 du moyen de gestion centralisée 15 transmet la demande au connecteur 19 (étape E23). Celui-ci récupère alors auprès du moyen d'accès 7 du gestionnaire d'applications 5:
- l'état d'activation de l'application 3, cet état d'activation (activée/désactivée) est récupéré auprès du moyen de stockage 9 (étapes E24 à E27).
- l'état d'activation de la protection par code (par exemple code PIN) de l'application 3. Cette information est également récupérée auprès du moyen de stockage 9 (étapes E28 à E31).
- la liste des dernières transactions sur l'application 3 récupérées auprès du journal des transactions 11 (étapes E32 à E35).

Toutes ces informations sont envoyées (étape E36) par le connecteur à l'interface utilisateur graphique 17 qui les envoient à l'interface homme machine 37 (étape E37) où ces informations comportant la liste des dernières transactions, le témoin d'activation et le témoin de protection de code PIN correspondant à l'application sont affichées (étape E37) sur l'interface homme machine 37.

Afin d'optimiser les temps d'accès et de traitement pour de futures opérations toutes ou parties de ces informations peuvent être stockées au niveau du connecteur 19. Dans ce cas, toute sollicitation ultérieure du moyen d'accès 7 du gestionnaire d'applications 5 n'est plus systématique.

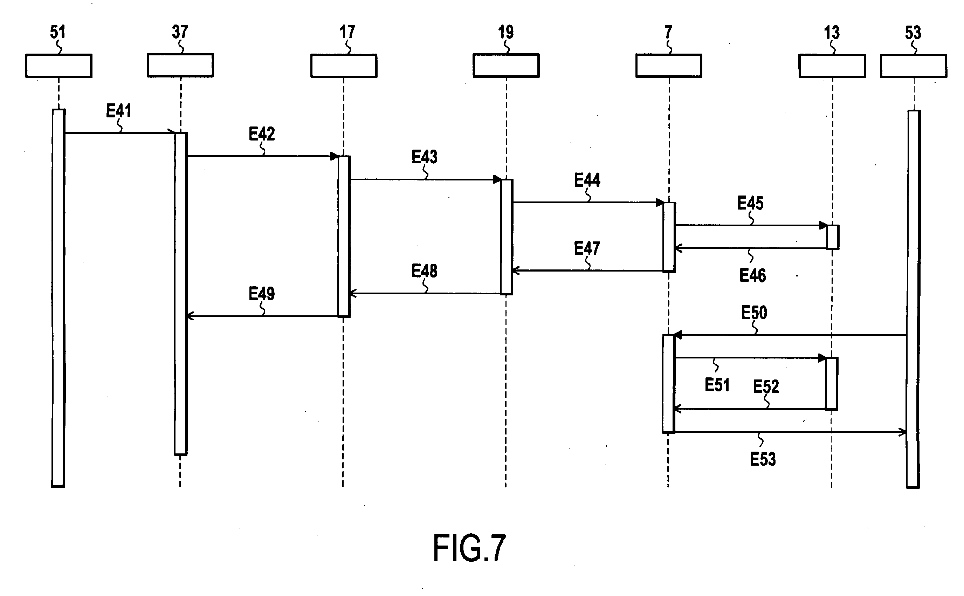

La figure 7 correspond à la vérification des paramètres de sécurité.

En effet, lorsqu'un code de sécurité (par exemple un code PIN) est requis, l'utilisateur 51 saisit son code via l'interface homme machine 37 (étape E41). Celui-ci est alors transmis au moyen d'accès 7 du gestionnaire d'applications 5 via le moyen de gestion centralisée 15 comportant l'interface utilisateur graphique 17 et le connecteur 19 (étapes E42 à E44). La vérification est effectuée (étape E45) par le module de sécurité 13 qui en cas d'erreur incrémente le compteur de nombre de codes faux consécutifs. Le module de sécurité 13 transmet l'état de vérification (vrai/faux) à l'interface homme machine 37 via le moyen d'accès 7, le connecteur 19 et l'interface utilisateur graphique 17 (étapes E46 à E49).

Si le nombre de tentatives de codes faux est atteint, l'application 3 est bloquée et le code verrouillé. Le déverrouillage ne peut être effectué par un opérateur humain. Seul un système de sécurité externe 53 peut procéder au déverrouillage (PUK) du code (étape E50) auprès du moyen d'accès 7 du gestionnaire d'applications 5. A noter que tout échec lors de cette phase entraîne le blocage définitif du code. A l'étape E51, le moyen d'accès 7 transmet le code de déverrouillage au module de sécurité 13 qui effectue la vérification et, en cas de vérification positive, débloque le code de sécurité ; il transmet ensuite l'état de vérification (vrai/faux) au moyen d'accès 7 (étape E52) qui à son tour le transmet (étape E53) au système de sécurité externe 53.

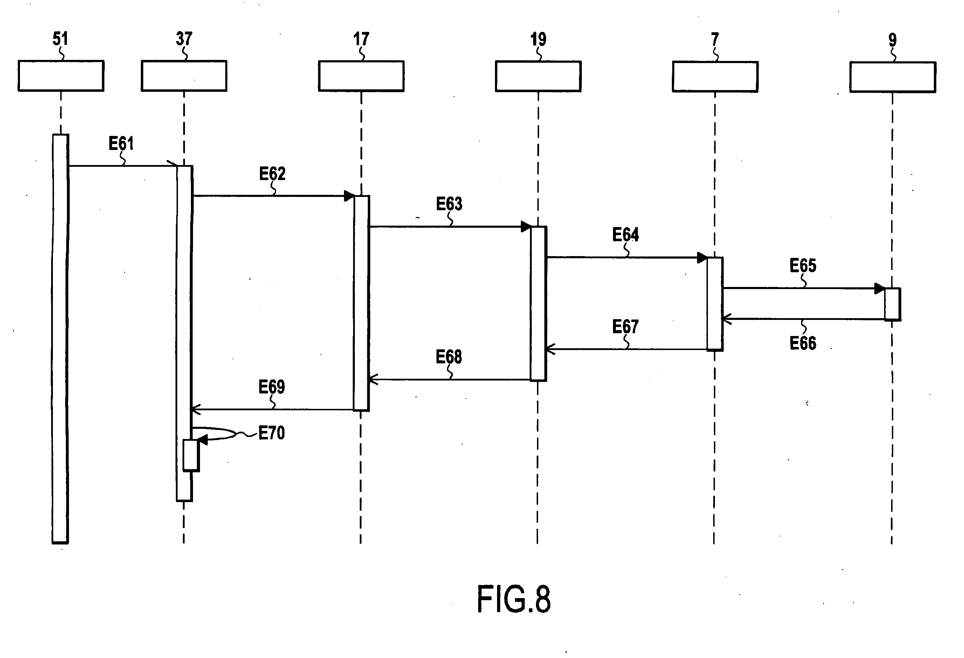

La figure 8 correspond à la demande par l'utilisateur 51 de la liste des applications disponibles sur le terminal mobile 21. En effet, l'utilisateur ou tout autre système externe autorisé peut demander la liste des applications disponibles sur le terminal mobile.

Selon cet exemple, l'utilisateur 51 demande la liste des applications à partir de l'interface homme machine 37 du terminal mobile 21 (étapes E61, E62). Cette opération peut également être réalisée par l'interface utilisateur graphique 17 pour mettre à jour ou "rafraîchir" la liste existante. Pour cela l'interface utilisateur graphique 17 sollicite la liste des applications 3 disponibles ou installées sur le terminal mobile 21 auprès du moyen d'accès 7 via le connecteur 19 (étapes E63, E64). Le moyen d'accès 7 s'adresse au moyen de stockage 9 (étape E65). En retour, l'interface homme machine 37 récupère la liste des applications disponibles sous la forme d'une liste contenant au moins les noms et index des applications (étapes E66 à E69). Cette liste est alors disponible sur l'interface homme machine 37 (étape E70).

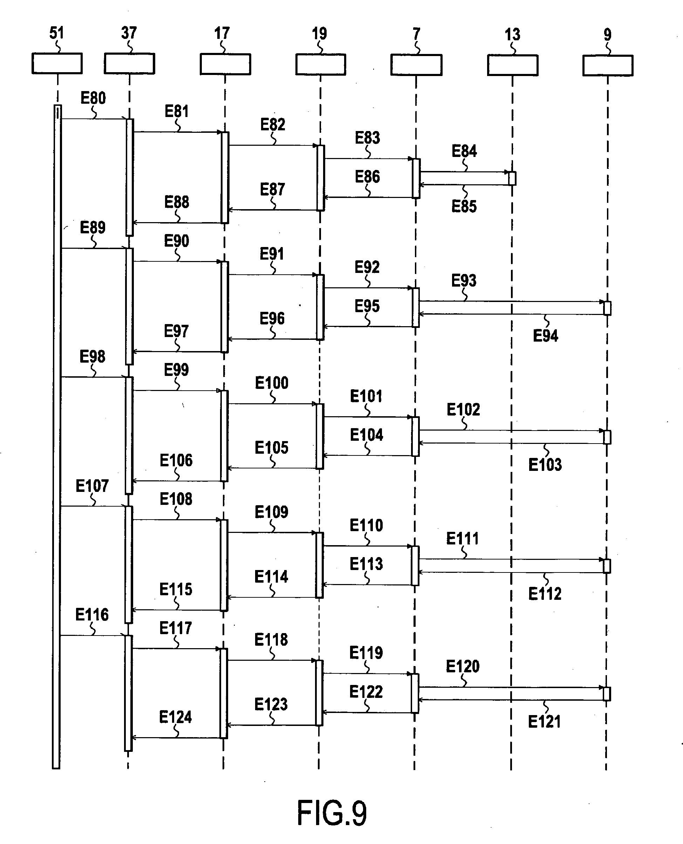

La figure 9 correspond à la mise à jour des paramètres d'une application. On notera que la mise à jour peut être réalisée pour des paramètres spécifiques à une application ou globaux à toutes les applications (par exemple le code PIN si l'on souhaite un seul et même code pour toutes les applications).

Les étapes E80 à E88 correspondent à la modification du code de sécurité qui peut concerner une application ou toutes les applications.

Dans le cas de la modification du code de sécurité pour une application 3 particulière, l'identifiant de l'application est transmis par l'utilisateur 51 via l'interface homme machine 37, en même temps que l'ancien et le nouveau code (étape E80). La mise à jour d'un code (global ou non) nécessite la vérification préalable du code de sécurité.

Suite à la demande de changement de code de sécurité par l'utilisateur 51, l'interface utilisateur graphique 17 reçoit le message de l'interface homme machine 37 (étape E81) et transmet, via le connecteur 19 au moyen d'accès 7 du gestionnaire d'applications 5 (étapes E82, E83), le nouveau code, l'ancien code et dans le cas de la mise à jour du code de sécurité d'une application l'identifiant de cette application. Le module de sécurité 13 reçoit le message (étape E84) et vérifie alors la validité du code de sécurité à partir de l'ancien code puis en cas de résultat positif procède à la mise à jour du code à l'aide du nouveau code transmis. Le résultat de la modification du code de sécurité (oui/non) est transmis (étapes E85 à E88) par le module de sécurité 13 à l'interface homme machine 37 via les éléments 7, 19, et 17 respectivement.

Les étapes E89 à E97 correspondent à l'activation d'une application.

Suite à une demande d'activation d'une application par l'utilisateur 51 via l'interface homme machine 37 (étape E89), l'interface utilisateur graphique 17 reçoit le message de l'interface homme machine 37 (étape E90) et transmet, via le connecteur 19 au moyen d'accès 7 du gestionnaire d'applications 5 (étapes E91, E92), un identifiant de l'application ainsi qu'une variable d'activation positionnée à vraie. Si l'application était désactivée, son activation est alors enregistrée dans le moyen de stockage 9 (étape E93). Sinon une erreur est retournée pour affichage sur l'interface homme machine 37 du terminal mobile. En tout cas, le résultat de l'activation (vrai/faux) est transmis (étapes E94 à E97) par le moyen de stockage 9 à l'interface homme machine 37 via les éléments 7, 19, et 17 respectivement.

Les étapes E98 à E106 correspondent à la désactivation d'une application.

Suite à une demande de désactivation d'une application 3 par l'utilisateur 51, via l'interface homme machine 37 (étape E98), l'interface utilisateur graphique 17 reçoit le message de l'interface homme machine 37 (étape E99) et transmet, via le connecteur 19 au moyen d'accès 7 du gestionnaire d'applications 5 (étapes E100, E101), un identifiant de l'application ainsi qu'une variable d'activation positionnée à faux. Si l'application était activée, sa désactivation est alors enregistrée dans le moyen de stockage 9 (étape E102). Sinon une erreur est retournée pour affichage sur l'interface homme machine 37 du terminal mobile. En tout cas, le résultat de la désactivation (vrai/faux) est transmis (étapes E103 à E106) par le moyen de stockage 9 à l'interface homme machine 37 via les éléments 7, 19, et 17 respectivement.

Les étapes E107 à E115 correspondent à l'activation de la protection par un code de sécurité.

Suite à une demande d'activation d'une application, d'une liste d'applications ou de toutes les applications par l'utilisateur 51, via l'interface homme machine 37 (étape E107), l'interface utilisateur graphique 17 reçoit le message de l'interface homme machine 37 (étape E108) et transmet la demande d'activation, via le connecteur 19 au moyen d'accès 7 du gestionnaire d'applications 5 (étapes E109, E110). L'absence de paramètres indique que l'activation concerne toutes les applications. La demande d'activation pour une ou plusieurs applications se fait en précisant dans la requête la liste des applications que l'on souhaite protéger. Dans les deux cas, la demande contient une variable d'activation de la protection positionnée à vraie. La demande est alors traitée par le moyen de stockage 9 (étape E111) qui vérifie la possibilité de l'activation (fonction déjà activée, application inexistante, etc.) avant toute mise en oeuvre. Le résultat de l'activation (vrai/faux) est transmis (étapes E112 à E115) par le moyen de stockage 9 à l'interface homme machine 37 via les éléments 7, 19 et 17 respectivement.

Les étapes E116 à E124 correspondent à la désactivation de la protection par un code de sécurité.

Suite à une demande de désactivation d'une application, d'une liste d'applications ou de toutes les applications par l'utilisateur 51, via l'interface homme machine 37 (étape E116), l'interface utilisateur graphique 17 reçoit le message de l'interface homme machine 37 (étape E117) et transmet la demande de désactivation, via le connecteur 19 au moyen d'accès 7 du gestionnaire d'applications 5 (étapes E118, E119). L'absence de paramètres indique que la désactivation concerne toutes les applications. La demande de désactivation pour une ou plusieurs applications se fait en précisant dans la requête la liste des applications que l'on ne souhaite plus protéger. Dans les deux cas la demande contient une variable d'activation de la protection positionnée à faux. La demande est alors traitée par le moyen de stockage 9 (étape E120) qui vérifie la possibilité de désactivation (fonction déjà désactivée, application inexistante, etc.) avant toute mise en oeuvre. Le résultat de la désactivation (vrai/faux) est transmis (étapes E121 à E124) par le moyen de stockage 9 à l'interface homme machine 37 via les éléments 7, 19 et 17 respectivement.

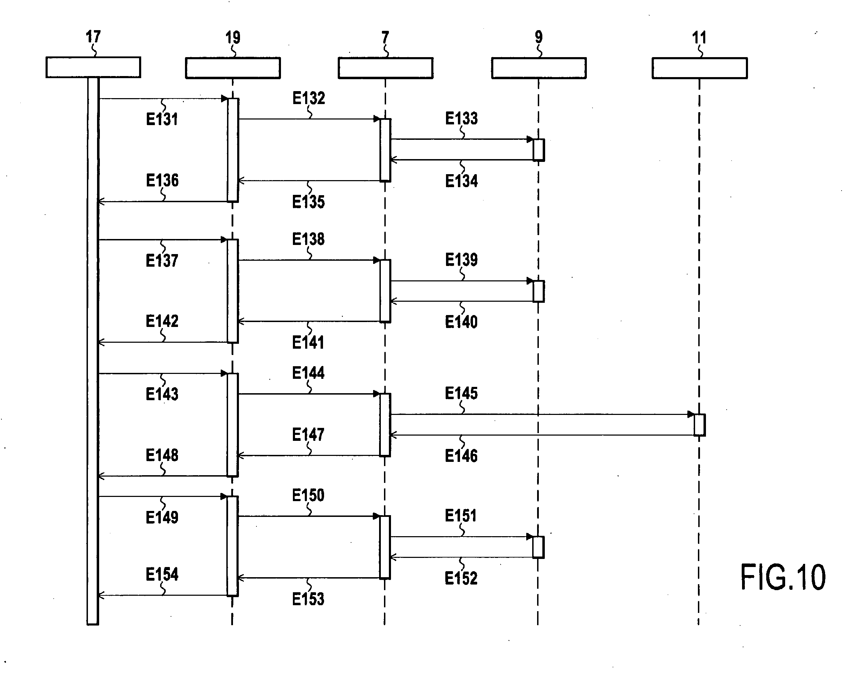

La figure 10 correspond à une récupération des paramètres d'une application. Ce schéma montre qu'il est possible de récupérer les paramètres d'une application 3 ou toutes données relatives à une ou à l'ensemble des applications 3 de l'utilisateur. Les paramètres et données sont ceux contenus dans le moyen de stockage 9, le journal des transactions 11 ou le module de sécurité 13.

Les étapes E131 à E136 correspondent à la récupération de l'état d'activation d'une application. L'interface utilisateur graphique 17 récupère auprès du moyen d'accès 7 du gestionnaire d'applications 5 via le connecteur 19 l'état d'activation d'une application à partir de son identifiant ou de son index. La demande est traitée par le moyen de stockage 9 qui retourne l'état d'activation (activée/désactivée) de l'application.

Ainsi, l'interface utilisateur graphique 17 transmet cette demande, via le connecteur 19 au moyen d'accès 7 du gestionnaire d'applications 5 (étapes E131, E132). La demande est alors traitée par le moyen de stockage 9 (étape E133) qui transmet l'état (activé/désactivé) à l'interface utilisateur graphique 17 via les éléments 7 et 19 respectivement (étapes E134 à E136).

Les étapes E137 à E142 correspondent à la récupération de l'état de la protection par un code PIN de l'application. L'interface utilisateur graphique 17 récupère auprès du moyen d'accès 7 du gestionnaire d'applications 5 via le connecteur 19, l'état de protection par code (par exemple par code PIN) d'une application à partir de son identifiant ou de son index. La demande est traitée par le moyen de stockage 9 qui retourne l'état de protection par code (par exemple par code PIN) de l'application (activé / désactivé).

Ainsi, l'interface utilisateur graphique 17 transmet cette demande, via le connecteur 19 au moyen d'accès 7 du gestionnaire d'applications 5 (étapes E137, E138). La demande est alors traitée par le moyen de stockage 9 (étape E139) qui transmet l'état (activé/désactivé) à l'interface utilisateur graphique 17 via les éléments 7 et 19 respectivement (étapes E140 à E142).

Les étapes E143 à E148 correspondent à la récupération de la liste des transactions d'une application 3 à partir de son nom ou de son index. Ainsi, l'interface utilisateur graphique 17 transmet cette demande, via le connecteur 19 au moyen d'accès 7 du gestionnaire d'applications 5 (étapes E143, E144). La demande est alors traitée par le journal de transaction 11 (étape E145) qui transmet alors la liste des dernières transactions pour l'application à l'interface utilisateur graphique 17 via les éléments 7 et 19 respectivement (étapes E146 à E148).

Les étapes E149 à E154 correspondent à la récupération de l'identifiant d'une application 3. Ainsi, l'interface utilisateur graphique 17 transmet cette demande, via le connecteur 19, au moyen d'accès 7 du gestionnaire d'applications 5 (étapes E149, E150). La demande est alors traitée par le moyen de stockage 9 (étape E151) qui transmet alors l'identifiant unique de l'application à l'interface utilisateur graphique 17 via les éléments 7 et 19 respectivement (étapes E152 à E154).

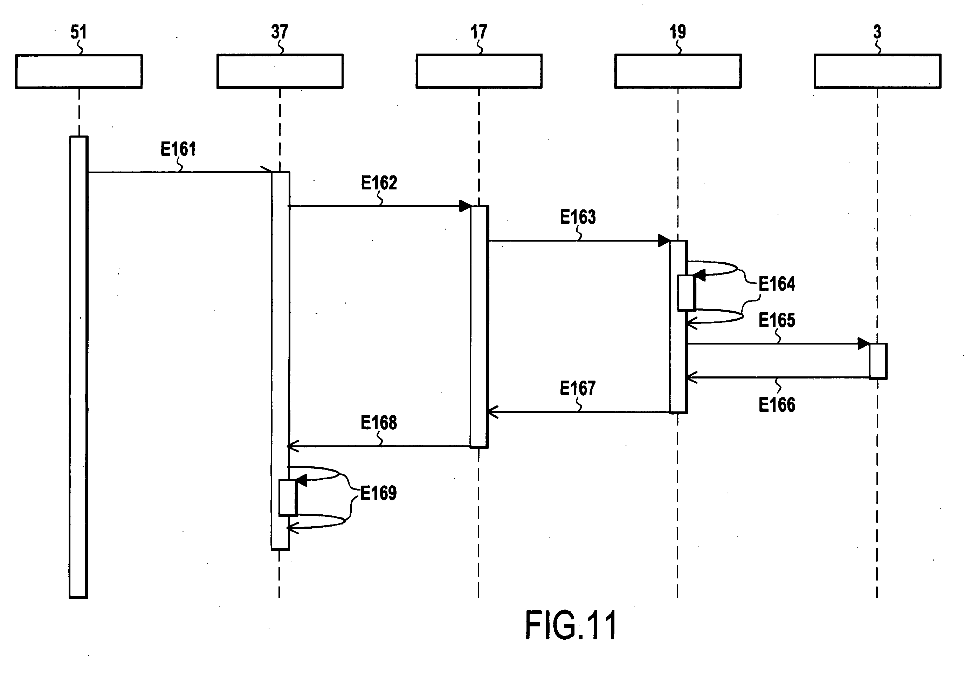

La figure 11 correspond à la récupération des données métier d'une application. Ceci permet de récupérer les données métier d'une application telles que l'identifiant du client, la date de validité de l'application, le crédit disponible, le type d'abonnement, etc. Ces données sont gérées par l'application 3 elle-même, contrairement aux paramètres de l'application qui eux sont gérés au niveau du moyen de stockage 9, du journal des transactions 11 ou du module de sécurité 13. Pour cette requête, c'est l'application 3 qui est directement sollicitée et non pas le gestionnaire d'applications 5.

Suite à une demande d'afficher les données métier relatives à une application 3, de l'utilisateur 51 via l'interface homme machine 37 (étapes E161, E162), l'interface utilisateur graphique 17 récupère, à partir de l'identifiant de l'application, la liste de ces données directement auprès de l'application 3 via le connecteur 19 du moyen de gestion centralisée 15 (étapes E163 à E167). L'application 3 doit préalablement avoir été sélectionnée par le connecteur 19 (étape E164). Si l'application n'existe pas (identifiant inexistant) un message du type "Application Inconnue" peut être affiché sur l'interface homme machine 37.

En variante, la récupération de données métier d'une application 3 peut être réalisée en s'adressant au moyen d'accès 7 du gestionnaire d'applications 5.

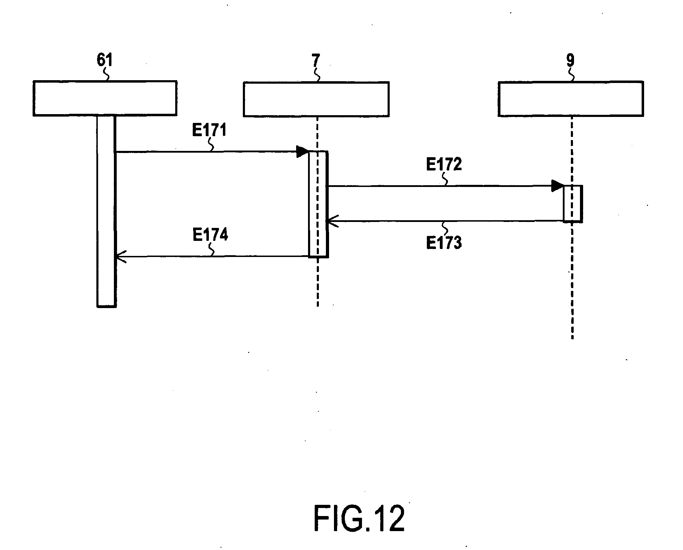

La figure 12 illustre l'enregistrement d'une application dans le terminal mobile. Suite à un téléchargement réussi d'une application 3 dans le terminal mobile, l'élément ou l'application (par exemple une Midlet Java) en charge du téléchargement (référencée 61) enregistre l'application 3 auprès du moyen d'accès commun 7 du gestionnaire d'applications 5 (étape E171). Celui-ci enregistre alors l'application 3 auprès du moyen de stockage 9 (étape E172). Les étapes E173 et E174 indique si l'enregistrement est réussi (oui/non). Ainsi, cet enregistrement permet d'offrir à l'utilisateur une vue unifiée de ses applications.

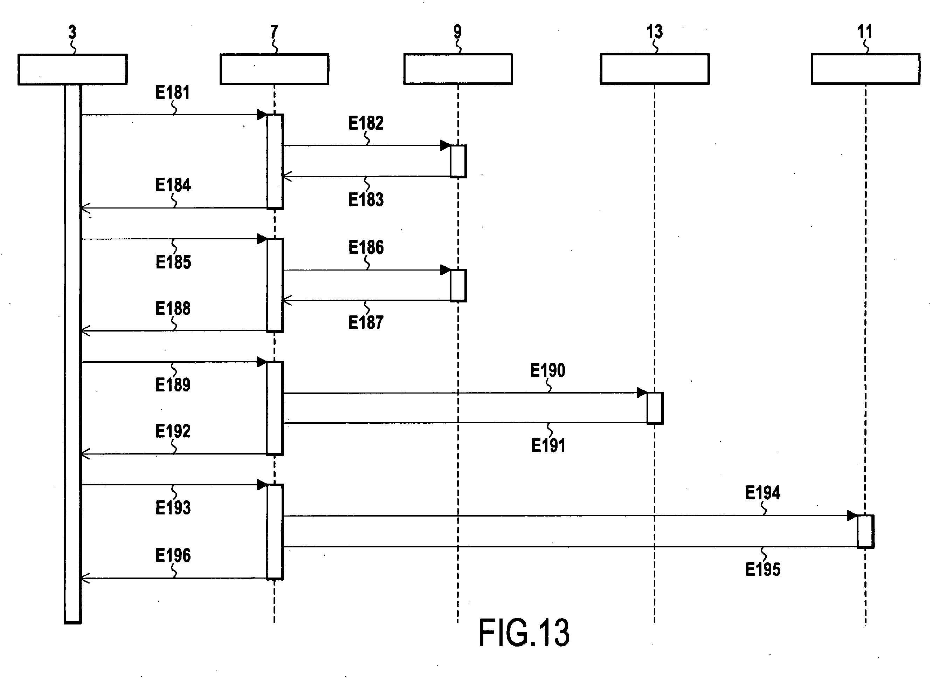

La figure 13 illustre l'utilisation d'une application. En effet, lors de la fourniture d'une prestation à un utilisateur, les applications vont solliciter le gestionnaire d'applications 5 afin de récupérer des informations sur leur paramétrage. A la fin de la réalisation d'une prestation, le gestionnaire d'applications 5 est également sollicité pour enregistrer la transaction.

Les étapes E181 à E184 correspondent à la lecture du drapeau d'activation de l'application 3. En effet, préalablement à toute utilisation d'un service, la lecture (étape E181) du drapeau d'activation permet de savoir si l'application 3 associée au service dans le terminal mobile de l'utilisateur est activée ou non. Ainsi, le moyen d'accès 7 du gestionnaire d'applications 5 s'adresse (étape E182) au moyen de stockage 9 détenteur de cette information. Le moyen de stockage 9 envoi (étapes E183, E184) à l'application 3 l'état d'activation (vrai/faux).

Les étapes E185 à E188 correspondent à la lecture du drapeau d'activation du code PIN. En effet, préalablement à toute utilisation d'un service, la lecture (étape E185) du drapeau d'activation du code PIN permet de savoir si une phase de vérification d'un code de sécurité est requise. Ainsi, le moyen d'accès 7 du gestionnaire d'applications 5 s'adresse (étape E186) au moyen de stockage 9 détenteur de cette information. Le moyen de stockage 9 envoi (étapes E187, E188) à l'application 3 l'état d'activation du code PIN (vrai/faux).

Les étapes E189 à E192 correspondent à la récupération (étape E189) du code PIN qui permet à une application autorisée de récupérer le code PIN de l'utilisateur pour l'application concernée. Ainsi, le moyen d'accès 7 du gestionnaire d'applications 5 s'adresse (étape E190) au module de sécurité 13 détenteur de cette information. Le module de sécurité 13 envoie (étapes E191, E192) à l'application 3 le code PIN demandé.

Les étapes E193 à E196 correspondent à l'enregistrement d'une transaction. En effet, à la fin d'une prestation, l'application 3 enregistre la transaction dans le journal des transactions 11, via le moyen d'accès 7 du gestionnaire d'applications 5 (étapes E193, E194). Lors de cette phase, l'application 3 précise son identifiant (ou son index) ainsi que des informations constituant la transaction. De préférence, ces informations comportent au moins l'identifiant de l'utilisateur, le type de la transaction, l'état de la transaction (oui/non), la date fournie par l'application, la durée et le montant si besoin.

## Revendications

1. Système de gestion d'au moins une application comprenant un terminal mobile (21) et au moins une carte (33) sur laquelle est enregistrée ladite au moins une application, dans lequel la carte comporte un gestionnaire d'applications (5) apte à gérer ladite au moins une application et le terminal mobile comporte un moyen de gestion centralisée (15) apte à communiquer avec le gestionnaire d'applications (5) de la carte pour échanger des informations relatives à ladite au moins une application de la carte,
le gestionnaire d'applications (5) de la carte (33) comportant un moyen de stockage (9) permettant l'enregistrement des informations relatives à ladite au moins une application,
**caractérisée en ce que** le gestionnaire d'applications (5) de la carte (33) comporte en outre un journal des transactions (11) apte à enregistrer des informations relatives aux transactions réalisées par l'utilisateur sur ladite au moins une application.

2. Système selon la revendication 1 **caractérisé en ce que** le moyen de gestion centralisée du terminal comporte :
- des moyens d'interface utilisateur graphique (17), et
- des moyens de connexion (19) aptes à échanger des informations relatives à ladite au moins une application entre les moyens d'interface utilisateur graphique (17) et le gestionnaire d'applications de la carte.

3. Carte (33) comprenant au moins une application et un gestionnaire d'applications (5) apte à échanger des informations relatives à ladite au moins une application avec un terminal mobile,
le gestionnaire d'applications (5) comportant un moyen de stockage (9) permettant l'enregistrement des informations relatives à ladite au moins une application,
**caractérisée en ce que** le gestionnaire d'applications (5) comporte en outre un journal des transactions (11) apte à enregistrer des informations relatives aux transactions réalisées par l'utilisateur sur ladite au moins une application.

4. Carte selon la revendications 3 **caractérisée en ce que** le gestionnaire d'applications (5) comporte en outre un module de sécurité (13) apte à administrer des données de sécurité relatives à ladite au moins une application.

## Patentansprüche

1. System zum Verwalten wenigstens einer Applikation, umfassend ein mobiles Endgerät (21) und wenigstens eine Karte (33), auf der die wenigstens eine Applikation gespeichert ist, wobei die Karte einen Applikationsmanager (5) umfasst, der geeignet ist, die wenigstens eine Applikation zu verwalten, und das mobile Endgerät ein Mittel zum zentralisierten Verwalten (15) umfasst, das geeignet ist, mit dem Applikationsmanager (5) der Karte zu kommunizieren, um Informationen bezüglich der wenigstens einen Applikation der Karte auszutauschen,
wobei der Applikationsmanager (5) der Karte (33) ein Speichermittel (9) umfasst, das die Speicherung der Informationen bezüglich der wenigstens einen Applikation ermöglicht,
**dadurch gekennzeichnet, dass** der Applikationsmanager (5) der Karte (33) ferner ein Transaktionsjournal (11) umfasst, das geeignet ist, Informationen bezüglich der durch den Benutzer auf der wenigstens einen Applikation durchgeführten Transaktionen zu speichern.

2. System nach Anspruch 1, **dadurch gekennzeichnet, dass** das Mittel zum zentralisierten Verwalten des Endgerätes umfasst:
- graphische Benutzerschnittstelle-Mittel (17) und
- Verbindungsmittel (19), die geeignet sind, Informationen bezüglich der wenigstens einen Applikation zwischen den graphische Benutzerschnittstelle-Mitteln (17) und dem Applikationsmanager der Karte auszutauschen.

3. Karte (33), umfassend wenigstens eine Applikation und einen Applikationsmanager (5), der geeignet ist, Informationen bezüglich der wenigstens einen Applikation mit einem mobilen Endgerät auszutauschen,
wobei der Applikationsmanager (5) ein Speichermittel (9) umfasst, das die Speicherung der Informationen bezüglich der wenigstens einen Applikation ermöglicht,
**dadurch gekennzeichnet, dass** der Applikationsmanager (5) ferner ein Transaktionsjournal (11) umfasst, das geeignet ist, Informationen bezüglich der durch den Benutzer auf der wenigstens einen Applikation durchgeführten Transaktionen zu speichern.

4. Karte nach Anspruch 3, **dadurch gekennzeichnet, dass** der Applikationsmanager (5) ferner ein Sicherheitsmodul (13) umfasst, das geeignet ist, Sicherheitsdaten bezüglich der wenigstens einen Applikation zu verwalten.

## Claims

1. A system for managing at least one application including a mobile terminal (21) and at least one card (33) in which is stored said at least one application, in which the card includes an applications handler (5) adapted to manage said at least one application and the mobile terminal includes centralized management means (15) adapted to communicate with the applications handler (5) of the card to exchange information relating to said at least one application of the card,
the applications handler (5) of the card (33) including storage means (9) for storing information relating to said at least one application,
**characterized in that** the applications handler (5) of the card (33) includes also a transaction log (11) for storing information relating to transactions effected by the user on said at least one application.

2. A system according to claim 1, **characterized in that** the centralized management means of the terminal include:
· graphical user interface means (17); and
· connection means (19) for exchanging information relating to said at least one application between the graphical user interface means (17) and the applications handler of the card.

3. A card (33) comprising at least one application, and an applications handler (5) adapted to exchange information relating to said at least one application with a mobile terminal,
the applications handler (5) comprising storage means (9) for storing information relating to said at least one application,
**characterized in that** the applications handler (5) includes also a transaction log (11) for storing information relating to transactions effected by the user on said at least one application.

4. A card according to claim 3, **characterized in that** the applications handler (5) includes also a security module (13) for administering security data relating to said at least one application.
